# EUROPEAN PATENT SPECIFICATION

(11) **EP 1 518 136 B1**
(45) Date of publication and mention of the grant of the patent: **02.03.2011**
(21) Application number: 03734570.9
(22) Date of filing: 12.06.2003
(51) Int. Cl.: C09J 7/02, C09J 123/00, G02B 5/00, B32B 7/06, C08L 23/08

(54) **OPTICAL FILTER, DISPLAY UNIT AND TOUCH PANEL UNIT**
OPTISCHER FILTER, ANZEIGEEINHEIT UND EINHEIT MIT BERÜHRUNGSEMPFINDLICHER TAFEL
FILTRE OPTIQUE, UNITE D'AFFICHAGE ET UNITE DE PANNEAU TACTILE

(30) Priority: 28.06.2002 JP 2002189903
(43) Date of publication of application: 30.03.2005
(73) Proprietor: 3M Innovative Properties Company, St. Paul, MN 55133-3427 (US)
(72) Inventor: MINAMI, Kazuhiko, Yamagata-city, Yamagata 990-0057 (JP)
(74) Representative: Vossius & Partner
(86) International application number: PCT/US2003/018525
(87) International publication number: WO 2004/003605

(56) References cited:
- EP-A- 0 196 861
- EP-A- 0 599 451
- EP-A- 0 808 885
- EP-A- 0 926 214
- US-A- 5 707 704
- PATENT ABSTRACTS OF JAPAN vol. 014, no. 237 (M-0976), 21 May 1990 (1990-05-21) & JP 02 063830 A (SUN A CHEM IND CO LTD), 5 March 1990 (1990-03-05)

## Description

### Field of the Invention

The present invention relates to the improvement of an optical filter, and also a display unit and a touch panel unit, each of which comprises an improved optical filter.

The optical filter of the present invention is used with being detachably adhered to a surface of a device such as a display. Furthermore, since this optical filter uses an adhesive comprising an olefin polymer with good thermal stability, it is suitably assembled in the device.

### Background

Personal computers (PC), portable terminals (such as personal data assistants (PDA), portable phones, etc.), unmanned customer service machines such as automated teller machines (ATM) of banks, ticket-vending machines, etc. should display images to provide users with information. The images are usually displayed on a monitor (an image-display). Such an image-display comprises essentially a complex unit having a display module and a light-transmitting panel provides to cover the light-exiting surface of the display module, that is, a display unit. The light-transmitting panel has a back surface facing the light-exiting surface of the display module, and a front surface which a user can touch. The user observes displayed images through the light-transmitting panel.

As a light-transmitting panel, a transparent protective panel which protects the light-exiting surface of the display module or a touch panel having a contact switch function is used. When the light-transmitting panel is the touch panel, it is possible for the display unit to have a switching function when a user directly touches the display unit with a finger, etc. or indirectly using a touch pen, etc., that is, an ON-OFF function.

In general, the touch panel comprises a touch panel module having a pair of transparent plates (or transparent films) and transparent electrodes (transparent conductive layers) which are fixedly provided on the respective back surfaces of the transparent plates. In the structure of the touch panel module, the transparent electrodes of the transparent panels are arranged in a non-contact state to face each other with leaving a minute gap between them. One of the transparent plates is the front surface-side transparent plate to which a pressure is applied in the operation of the touch panel, while the other is the back surface-side transparent plate which is in contact with the front surface-side transparent panel when the operation pressure is applied. Usually, the electrode on the front surface-side transparent plate is called a movable electrode, which can move towards the fixed electrode on the back surface-side transparent plate in a touched area, when an operator (or a user) touches the touch panel. That is, when the operator touches a specific point of the surface of the front surface-side transparent plate with a finger or a pen, the transparent conductive layer of the front surface-side transparent plate at that point is in contact with the transparent conductive layer of the back surface-side transparent plate. Thus, the touch panel becomes a conducting state only at the specific point. Then, the point in the conducting state is sensed with a sensor to specify the position on the touch panel pressed by the operator, and the switching function (ON-OFF function) works.

A display unit may be a light-emitting display, for example, a liquid crystal display (which may be named a liquid crystal display device). In general, the liquid crystal display comprises a liquid crystal panel (sometimes referred to as "liquid crystal display panel" or "LCD") as a display module, and a light source, that is, a backlight which illuminates the liquid crystal panel from its back surface (a surface opposite to the displaying surface).

The light from the light source passes through the liquid crystal panel and exits from the surface of the liquid crystal panel (light-exiting surface) to display the image on the surface. The light-transmitting panel such as the touch panel module is provided on the image-displaying surface of the liquid crystal panel (light-exiting surface).

In general, an optical filter is installed in such a display unit. The optical filter usually comprises an optical film such as a louver film, a prism film, a lens film, a polarizing film, a dielectric reflective film, etc., and an adhesive layer which serves to fix the optical film to an adherent. For example, an optical filter comprising a louver film is used for the following purpose.

In the case of a display unit, the light beam unnecessarily exits in directions (side directions) remote from the front direction of the light-exiting surface. Thus, the liquid crystal display can be seen not only by a user or an operator positioned in the front direction but also by a person standing at a site in the side direction apart from the front direction. Therefore, it is difficult to guard the privacy of the user. Furthermore, when the display unit is installed in an automobile-loaded device such as a car navigation system, etc., the reflection of the panel on a windshield may interfere with the eyeshot of a driver.

Therefore, to solve such a problem, a louver film, which can control the direction of the emitted light beam, is used. The louver film has a plurality of minute louvers (or louver-form elements) inside. An optical filter having a louver film is attached to the display screen of the display unit (that is, the front surface of the light-transmitting panel) to control the direction of the emitted light beam. Thus, with such a display device, the unnecessary exiting of the light beams in the side directions can be effectively prevented, and it is possible to guard the privacy or prevent the reflection of the displayed image on the windshield.

In the louver film, the louvers have an effect to control the propagating direction of the light which has passed through the louver film in a specific light-exiting angle (direction-control effect). Thus, the louver film is also named a light control film.

The structures, production and applications of the louver films are disclosed in some prior publications, for example, US RE27,617, US Patent No. 3,707,416, etc.

JP-A-8-224811 discloses the formation of a pressure-sensitive adhesive layer on at least one of the main surfaces (front and back surfaces) of a louver film. The pressure-sensitive adhesive layer used in this patent application comprises a pressure-sensitive adhesive containing a self-adherent polymer. The self-adherent polymer is tacky at a room temperature (about 25°C).

Accordingly, the use of the optical film comprising the louver film can effectively prevent the exiting of light in the side directions.

Preferably, a highly transparent adhesive layer is used to adhere the optical film to the adherent. For example, an adhesive layer, which is used in a protective film for protecting the surface of the display screen, may be used, since such an adhesive layer is highly transparent. As the protective film having such an adhesive layer, the following protective films are known:
- A protective film having a repeelable adhesive layer containing a silicone rubber (JP-A-2000-56694);
- A protective film having a repeelable adhesive layer containing an olefin base polymer (JP-A-2001-146580, JP-A-8-157791, JP-A-5-194923, etc.).

These protective films have a repeelable adhesive layer, so that they can easily be fixed to the display screen and detached from the screen when needed. The above two types of the repeelable adhesive layers are typical examples of the adhesive layers having high transparency and good repeeling properties.

When the optical filter is used to cover the surface of the touch panel (the surface to be touched by the user), the following drawbacks may arise:

Since the user cannot directly touch the surface of the touch panel (operation surface), the user should apply a large force so that the force exerted by the pressing operation reaches the operation surface through the optical filter. When it is desirable to control the exiting direction of the light beam in a relatively narrow view angle range, the louver film having a relatively large thickness should be used. However, when the louver film having a relatively large thickness is used, the pressing force applied to the surface of the optical filter may not reach the operation surface of the touch panel, since the louver film has low flexibility. When the pressing force does not reach the operation surface, the touch panel (that is, the switch) malfunctions.

The reason why the thickness of the louver film is made large to control the direction of the light beam in the relatively narrow view angle range is as follows:

The louvers of the louver film extend from the back surface to the front surface of the film so that the louver face forms a specific angle against the back surface of the film (the surface receiving the light emitted from the display module) and the front surface of the film (the surface emitting the light, which is received on the back surface and passes through the louver film). To control the direction of the light beam in the relatively narrow view angle range, the louver angle (in relation to the normal line of the surface of the louver film) should be made relatively small and the extending length of the louver should be made relatively large. When the extending length of the louver is increased, the thickness of the louver film increases.

In such a case, the install of the optical filter comprising the louver film inside the display unit can effectively prevent the unnecessary exiting of the light beam in the side directions, and also allows the user to directly touch the touch panel.

JP-U(utility model)-61-172418 discloses to install the optical filter (the louver film) in the display unit. This publication discloses a plane switch (a touch panel unit) having a light-control function, which can be used as a part of a display unit. The display unit is finished by arranging this plane switch on the light-exiting surface of the display module.

In such a plane switch, a fixed electrode for the touch panel is formed at a specific position of the light-exiting surface of the optical filter, and a transparent resin film having a movable electrode which is paired with the fixed electrode is provided to cover the optical filter with leaving a specific gap between them. The touch panel module comprises the fixed electrode and the front surface-side transparent film having the movable electrode. That is, in the case of the display unit having the plane switch, the touch panel module is provided to cover the optical filter, and thus the optical filter is not present on the outermost surface of the display unit.

In these days, there is a tendency to prefer that such an optical film is not permanently fixed to the display screen but it can be detached from the screen at any desirable time and easily refixed to the screen. When a repeelable adhesive layer is used as an adhesive layer to fix the optical filter to the adherent surface, the optical filter can be easily fixed to the display screen and it may be detached at any desirable time and refixed to the screen with ease.

However, the kind of the polymer in the adhesive layer should be further investigated for the following reason.

As described above, the optical filter is provided to cover the display screen, or it is installed inside the display device, for example, it is provided between the display module and the touch panel module, as described above. In the latter case, the optical filter is fixed to the surface of either module (that is, the light-exiting surface of the display module or the back surface of the touch panel module facing the light-exiting surface of the display module) with the adhesive layer.

In such a case, the optical film is used with being confined in a closed space. The monitor of a car-navigation system in which the touch panel unit is installed is one example of the device having such a closed space. Heat generated from the parts of the display tend to accumulate in the closed space so that the temperature in the space increases. Accordingly, when such a device is used for a long time, the adhesive layer of the optical filter is exposed to a relatively high temperature for a long time. Thus, the thermal decomposition of the adhesive polymer contained in the adhesive layer may be accelerated. Accordingly, many users fear that a relatively large amount of the decomposed products are generated and remain, and may have adverse influences on the device.

### Summary of the Invention

To solve the above problems, the present invention provides an optical filter comprising an optical film and containing an adhesive for adhering said optical film to an adherent surface on the surface of said optical film or inside said optical film, wherein said adhesive comprises an olefin polymer and has a repeeling property from the adherent surface.

### Brief Description Of The Drawing

Fig. 1 is a cross sectional view of one example of the optical filter of the present invention.
Fig. 2 is a cross sectional view of one example of the display unit of the present invention.

### Reference numerals

100: optical filter; 1: louver film; 2: repeelable adhesive layer; 11: front surface-side substrate; 12: back surface-side substrate; 13: louver layer; 14,15: permanent adhesive layers.

21: display module; 22: touch panel module; 23: optical filter.

### Detailed Description

The adhesive layer comprising the olefin polymer has good adhesion properties to the adherent surface and good repeeling properties. Thus, the optical filter can be easily re-adhered, and it is detached at any desired time and refixed.

The polyolefin polymer has high thermal stability and generates few thermally decomposed products. Even if the thermally decomposed products are generated, no cyclic oligomers are formed. Thus, the thermally decomposed products seldom remain in the device. This may be because the backbones of the olefin polymer do not have bonds containing an oxygen atom such as siloxane bonds, ether bonds, etc.

In the case of polymers having oxygen atoms in the backbones such as silicones, cyclic oligomers tend to form as thermally decomposed products, since the molecular chains are easily cleaved at the bonds containing the oxygen atom on heating, when such bonds are contained in the backbones. Since the segments formed by the cleaving of the molecular chains have polarity due to the oxygen atoms, they tend to re-bond to form the cyclic oligomers. Such cyclic oligomers easily solidify since they have oxygen atoms in the molecules, or they are difficult to be evaporated even when they are liquids. In contrast, the olefin polymers have no bond containing an oxygen atom in the backbone, they do not suffer from the thermal decomposition as described above, and the problems caused by the cyclic oligomers.

With the display unit assembled using the optical filter of the present invention, the optical filter installed is adhered to at least one of the surfaces of the modules, that is, (1) the back surface of the touch panel module and (2) the light-exiting surface of the display module.

In general, the optical filter is adhered to almost all the area of the region which can be observed by the user (the observable region). Accordingly, there is no aerial interface (an interface with a gap, that is, an air layer) in the observable region of the light-entering surface and light-exiting surface of the optical filter.

If the aerial interface is present, interfacial reflection occurs at the interface. The interfacial reflection at the interface between the optical filer and the touch panel module decreases the light-transmittance of the touch panel unit, and the interfacial reflection at the interface between the optical filter and the display module decreases the amount of light exiting from the display module. If the aerial interface is present on the light-entering surface of the optical filter (the surface facing the display module), and also on the light-exiting surface of the optical filter (the surface facing the touch panel module), the amount of light reaching from the display module to the surface of the touch panel module decreases and thus the luminance of the image on the display unit surface (the surface of the touch panel module) decreases.

According to the present invention, since the optical filter is adhered to at least one of the surfaces of the modules, the unnecessary interfacial reflection can be effectively prevented. Consequently, the decrease of the amount of light reaching from the display module to the surface of the touch panel module can be suppressed, and thus the deterioration of the luminance of the image on the display unit surface (the surface of the touch panel module) can be effectively prevented.

When the touch panel unit is assembled using the optical filter of the present invention, the repeeling property of the adhesive is advantageous from the following viewpoint:

Firstly, when bubbles are trapped at the adhesive surface, they can be easily removed. If the repeeling is difficult and readhesion of the optical filter is difficult, it is not easy to escape the air trapped between the adhesion surface of the optical filter and the adherent surface. If air bubbles remain, the aerial interfaces, at which the interfacial reflection occurs, are formed. To effectively prevent the decrease of the amount of light reaching from the display module to the surface of the touch panel module, it is preferable to adhere the optical filter to the module without leaving such bubbles.

The easy removal (peeling) of the optical filter advantageously serves to the recycling of the parts. According to the present invention, when the component parts are collected for recycling, the touch panel unit can be disassembled to a genuine touch panel module (containing a fixed electrode) and a genuine optical filter (with no electrode). In particular, the touch panel module is easily damaged when the once adhered optical filter is detached from the module, since the touch panel module consists of a laminate of the front surface-side transparent plate (or transparent film) on which the movable electrode is provided and which is touched by the operator and the back surface-side transparent plate (substrate) on which the fixed electrode is provided. Therefore, when the optical filter is adhered to the touch panel module with the adhesive layer, the adhesive layer is preferably the repeelable adhesive layer.

When the optical film comprises the louver film, the user can directly touch the touch panel, and also the unnecessary exiting of the light beam from the display module in the side directions can be prevented.

The touch panel unit (the laminate of the touch panel module and the optical filter), which is used to assemble the display unit of the present invention, preferably comprises the optical filter, which is beforehand fixed to the touch panel module with the repeelable adhesive layer. That is, preferably, the touch panel unit comprises the touch panel module and the optical filter adhered to the back surface of the touch panel module.
Such a touch panel module advantageously prevents the decrease of the light-transmittance of the touch panel unit, and also the deterioration of the luminance of the image on the surface of the display unit, since it does not form the aerial interface on the light-exiting surface of the optical film.

Preferably, the optical filter used to assemble the touch panel unit of the present invention (the optical filter for the touch panel) has the repeelable adhesive layer beforehand. For example, the optical filter preferably comprises the louver film and the repeelable adhesive layer which is fixedly provided to the front surface side of the louver film, and it is fixed to the back surface of the touch panel module with the adhesive layer. Such an optical filter can be easily adhered to the back surface of the touch panel module without forming aerial interfaces on the light-exiting surface of the optical filter. The prevention of the interfacial reflection on the light-exiting surface of the optical filter is particularly advantageous to prevent the decrease of the light-transmittance of the touch panel unit.

The louver film may have adhesive layers fixed to the both surfaces thereof and it may be adhered to the touch panel module and the display module both. When the optical filter is adhered to the both modules, one of the modules (for example, the touch panel module) is adhered to the optical filter and then the optical filter carrying one module is adhered to the other (for example, the display module). However, when the optical filter carrying one module is adhered to the other module, it is difficult to escape the bubbles trapped between the adherent surface of the module and the adhesive layer. In such a case, it is difficult to use a pressing tool such as a roll, or it is difficult to press the optical filter to the other module so that the area of the adhered surface gradually increases without trapping bubbles.

Therefore, preferably, one of the modules is adhered to the optical filter, while the other is not. It is advantageous to adhere the optical filter to the both modules from the viewpoint of the prevention of the deterioration of luminance of the image on the surface of the display unit. However, the deterioration of luminance of the observed image can be prevented when the optical filter is adhere to only one of the modules. In particular, when the optical filter is adhered to the touch panel module, the deterioration of the luminance is more effectively prevented.

The display unit of the present invention is installed in the display device comprising the touch panel having the contact switch function, and is suitable for assembling the touch panel type display device.

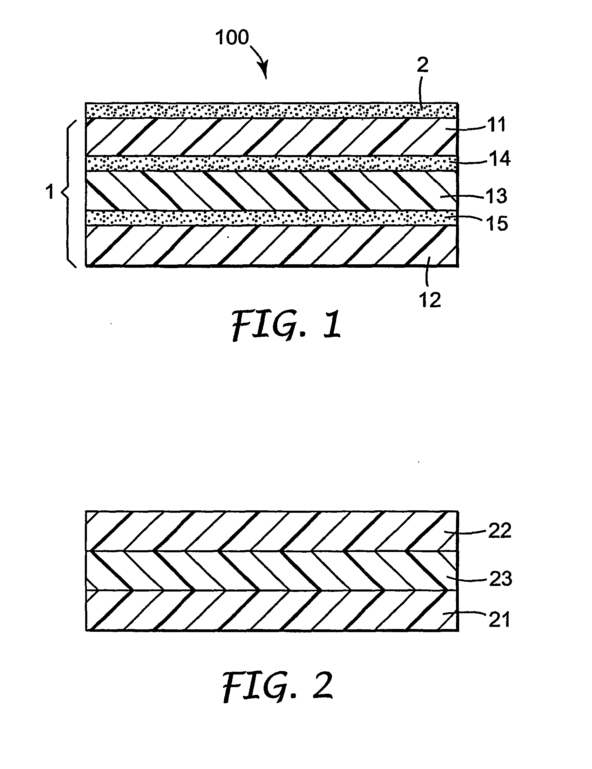

One preferred embodiment of the optical filter of the present invention has the structure shown in Fig. 1. In the optical filter (100) shown in Fig. 1, the optical film comprises the louver film. That is, the optical film comprises the louver film (1) and the repeelable adhesive layer (2) which is fixed to the front surface of the louver film (1).

The repeelable adhesive layer (2) comprises an olefin polymer and can repeelably adhere the optical filter to the adherent. Such an optical filter is particularly suitable as an optical filter constituting a display unit or a touch panel unit.

The louver film (1) has the louver layer (13) having minute louvers (louver-form elements) (not shown) inside, and the backside substrate (11) and the surface side substrate (12), which are fixed to the louver layer (13). The substrates (11) and (12) are fixed to the louver layer (13) with the permanent adhesive layers (14) and (15) respectively. The repeelable adhesive layer (2) is provided so that it is adhered to substantially the whole area of the back surface of the substrate (11) (that is, the surface of the substrate (11) opposite to the surface to which the louver layer is adhered).

Preferably, the material of each substrate (11) or (12), each permanent adhesive layer (14) or (15) and the repeelable adhesive layer (12) has as high transparency as possible. The light transmittance of each material is usually at least 80%, preferably at least 85%, more preferably at least 90%. Herein, the "light transmittance" means a total light transmittance, which is measured with a haze meter using light having a wavelength of 550 nm.

The thickness of the optical filter (having the repeelable adhesive layer) is usually from 250 to 500 µm, preferably from 300 to 450 µm.

The two substrates (11) and (12) are preferably installed in the louver film (1), since they suppress the warp or curl of the louver layer (13) and in turn the warp or curl of the louver film comprising the louver layer. The surface side substrate (12) also functions as a protective layer which protects the louver layer (13) from the damages.

The substrates (11) and (12) is usually formed of polymer sheets. As the polymers of the polymer sheets, those having no bond containing an oxygen atom in the backbone, three-dimensionally crosslinked polymers or crystalline polymers are preferable. The three-dimensionally crosslinked polymers or crystalline polymers are less thermally decomposed than uncrosslinked polymers or amorphous polymers. Examples of the polymers of the substrates include polycarbonates, polyesters (e.g. polyethylene terephthalate, polyethylene naphthalate, etc.) acrylic polymers, vinyl chloride polymers, crystalline polyurethane (e.g. polycarbonate base polyurethane, etc.) and the like.

The thickness of each of the substrates (11) and (12) is usually from 25 to 200 µm.

The permanent adhesive layers (14) and (15) may be formed of a conventional adhesive such as a pressure-sensitive adhesive, a heat-sensitive adhesive, a curable adhesive, etc. In general, the adhesive comprises a self-adherent polymer, which is preferably crosslinked. The self-adherent polymer means a polymer which exhibits tackiness at room temperature (about 25°C).

The self-adherent polymer of the permanent adhesive layers are preferably those having no bond containing an oxygen atom in the backbone, and may be, for example, an acrylic polymer, a nitrile-butadiene copolymer (e.g. NBR, etc.), a styrene-butadiene copolymer (e.g. SBR, etc.), an amorphous polyolefin, etc. The self-adherent polymer may comprise one or more of these polymers.

The thickness of each permanent adhesive layer is usually from 5 to 50 µm.

The peel strength (F) of the permanent adhesive layer (14) is not limited but is usually from 6 to 50 N/25 mm, when it is measured at a peeling rate of 90 inch/min. (about 229 cm/min.) at a peeling angle of 180 degrees. Also the peel strength of the permanent adhesive layer (15) is not limited but is usually from 6 to 50 N/25 mm.

The optical filter of the present invention can be produced as follows:

Firstly, an adhesive film is provided by placing the permanent adhesive layer (14) on the back surface of the surface side substrate (11) and the repeelable adhesive layer (2) on the front surface of the substrate (11). Next, the adhesive film and the louver layer (13) are adhered and fixed each other through the permanent adhesive layer (14) to form the louver layer having the repeelable adhesive layer. Finally, the backside substrate (12) is adhered and fixed to the louver layer having the repeelable adhesive layer through the permanent adhesive layer (15) to finish the optical filter. The permanent adhesive layer (15) may be placed on the front surface of the backside substrate (12) and then the substrate with the permanent adhesive layer is adhered to the surface of the louver layer, or the permanent adhesive layer (15) is provided on the surface of the louver layer having the repeelable adhesive layer and then the backside substrate (12) is laminated.

Alternatively, the louver layer and two substrates are laminated to prepare the louver film (1), and then the repeelable adhesive layer (2) is fixed to the front surface of the surface side substrate (11) to finish the optical filter.

Alternatively, the louver layer (13) and one or both of the two substrates are fusion bonded at their adhering surfaces without the use of the permanent adhesive layers.

The front surface side substrate and the permanent adhesive layer which adheres this substrate to the louver layer may be eliminated, or the back surface side substrate and the permanent adhesive layer which adheres this substrate to the louver layer may be eliminated, as long as the effects of the present invention are not impaired.

The repeelable adhesive layer has an adhesion force (peel strength) in a specific range. Usually, the repeelable adhesive layer has a peel strength of 0.2 to 5 N/25 mm, which is measured against the surface of polyethylene terephthalate at a peeling rate of 90 inch/min. (about 229 cm/min.) at a peeling angle of 180 degrees.

Since this peel strength (which may be referred to as "peel strength against PET") is at least 0.2 N/25 mm, the optical filter can be adhered to the module surface without leaving any gap between them. Since the peel strength against PET does not exceed 5 N/25 mm, the optical filter can easily be detached at any desired time and refixed without damaging the module (the touch panel module, the liquid crystal panel, etc.).

Since the touch panel module often has a laminate structure formed by laminating a plurality of the parts as described above, the repeelable adhesive layer having as small peel strength as possible is preferably used so that the laminate structure is not broken when the optical filter, which is adhered to the surface of the laminate, is detached. In addition, the bubbles trapped between the adherent and the adhesive layer are allowed to escape easily. From these viewpoints, the peel strength of the adhesive layer against PET is preferably from 0.3 to 4.5 N/25 mm, more preferably from 0.5 to 4.0 N/25 mm. The peel strength of the optical filter against the adhesion surface of the adherent actually used is usually from 0.2 to 5 N/25 mm, preferably from 0.3 to 4.5 N/25 mm, more preferably from 0.5 to 4.0 N/25 mm, when it is measured at a peeling rate of 90 inch/min. (about 229 cm/min.) at a peeling angle of 180 degrees.

The adhesive layer comprises an adhesive containing an olefin polymer. The olefin polymer contained in the adhesive is a homopolymer or a copolymer having repeating units derived from an olefin having at least 3 carbon atoms, preferably 3 to 16 carbon atoms. The olefin polymer may be a polymer which is conventionally used as an adhesive for a protective film.

The repeating units derived from the olefin having at least 3 carbon atoms is branched olefinic units having a branched structure. Thus, the olefin polymer is amorphous due to the effect of the side chain alkyl groups, and usually has a glass transition temperature (Tg) of room temperature (25°C) or less. Therefore, the olefin polymer has adequate tackiness. Tg of the olefin polymer is preferably from -70 to 25°C, more preferably from -60 to 20°C.

The olefin polymer has an intrinsic viscosity of preferably from 0.4 to 9.0 dl/g, more preferably from 0.5 to 6.0 dl/g, particularly preferably from 0.7 to 3.0 dl/g.

The olefin polymer has a weight average molecular weight of preferably 5,000 to 50,000,000, more preferably from 50,000 to 10,000,000. This molecular weight is measured with the uncrosslinked polymer.

Examples of the olefins which form the branched olefinic repeating units include α-olefins such as 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, etc.; alkadienes having at least 4 carbon atoms such as butadiene, isoprene, etc.; and so on. These olefins may be used singly or as a mixture of two or more of them.

The olefin polymers may be used singly or as a mixture of two or more of the olefin polymers.

The olefin polymers include the copolymers of the olefin and at least one vinyl monomer. Examples of the vinyl monomer include styrene, ethylene (an olefin having 2 carbon atoms), etc.

Preferred examples of the olefin polymers include atactic polypropylene, a copolymer of atactic polypropylene and at least one vinyl monomer, a polymer of a monomer containing an olefin having 4 to 16 carbon atoms, a block copolymer of styrene and an olefin, etc. The copolymer comprising styrene may be a styrene block copolymer such as a styrene-butadiene copolymer, a styrene-isoprene copolymer, etc.

The elastic modulus of the repeelable adhesive layer is selected so that the peel strength is in the above-described range. For example, the elastic modulus G (storage modulus) is usually from 20 to 300 kPa, preferably from 30 to 200 kPa, more preferably from 50 to 100 kPa, when it is measured by a dynamic viscoelasticity measuring method at 25°C and a frequency of 1 rad/sec. in the shear mode. When the modulus G is too small, the repeeling property may deteriorate. When the modulus G is too large, the adhesion of the optical filter to the adherent surface may deteriorate and the aerial interfaces may form between the optical filter and the adherent.

To effectively increase the elastic modulus of the adhesive layer, the olefin polymer is preferably three-dimensionally crosslinked. The crosslinked polymer may be in the form of a gel.

To improve the repeeling properties of the adhesive layer, the following methods are preferably employed:
(i) An ethylene-olefin copolymer or a styrene-olefin copolymer is used, and the content of the ethylene units or the styrene units is increased.
(ii) A crystalline polymer such as polyethylene is used in combination with the olefin polymer.
(iii) The olefin polymer is three-dimensionally crosslinked as described above.

Two or more of these methods may be combined.

The adhesive layer may contain a self-adherent resin or a plasticizer as long as the effects of the present invention are not impaired. The use of such an additional component is advantageous for increasing the adhesion of the optical filter to the adherent. Such a component is preferably a resin or oil comprising an aliphatic compound. The adhesive layer may contain other polymer such as polystyrene, polychloroprene, ethylenevinyl acetate copolymer (EVA), etc. as long as the effects of the present invention are not impaired.

Alternatively, the optical filter is formed using the louver layer containing the polymer having the above repeeling properties to impart the repeeling property to the surface of the louver layer. In this case, the surface of the louver layer is directly adhered to the adhesion surface of the module. Since the louver layer functions as the repeelable adhesive layer, no other adhesive layer is provided to the optical film.

The louver layer used in the present invention is a film having minute louvers (or louver-form elements) inside the film. In general, the louver layer comprises light-transmitting parts and minute louver elements which shield light.

Preferably, the light-transmitting part has a larger width than the width of the louver element (a size of the louver element in the direction in parallel with the surface of the louver layer and perpendicular to the lengthwise direction of the louver element), so that the light transmittance of the optical filter as a whole does not decrease. The width of the light-transmitting part is preferably from 50 to 500 µm, more preferably from 70 to 200 µm.

Preferably the width of the louver element is smaller than that of the light-transmitting part, so that the light transmittance of the optical filter as a whole does not decrease. The width of the louver element is from 1 to 100 µm, preferably from 3 to 30 µm. The angle of the louver element is usually from 40 to 90 degrees. The angle of the louver element means an angle between the surface of the louver layer and the plane of the louver element. When the louver element lies in parallel with the surface of the louver layer, the angle of the louver element is 0 degree, while it lies at right angles with the surface of the louver layer, the angle of the louver element is 90 degrees.

The thickness of the louver layer can be suitably determined according to the application of the optical filter. As the thickness of the louver layer decreases, the effect to control the propagation direction of light tends to decrease. When the thickness of the louver layer is large, it is difficult to decrease the total thickness of the optical filter. Accordingly, the thickness of the louver element is preferably from 100 to 500 µm, more preferably from 150 to 400 µm.

The light-transmitting parts of the louver layer are preferably made of a polymer having a high transparency. As such a polymer, a thermoplastic resin, an elastic polymer, a thermosetting resin, a resin curable with an actinic ray such as UV ray, etc. can be used. Examples of such resins include cellulose resins such as cellulose acetate butyrate, triacetylcellulose, etc.; polyolefin resins such as polyethylene, polypropylene, etc.; polyester resins such as polyethylene terephthalate, etc.; polystyrene; polyvinyl chloride; acrylic resins; polycarbonate resins; and the like.

The louver elements may be formed from a light-shielding material which can absorb or reflect light. Examples of such a material include (1) dark pigments or dark dyes such as black or gray pigments or dyes, (2) metal such as aluminum, silver, etc., (3) dark metal oxides, and (4) the above-described polymers containing the dark pigments or dyes.

The louver layer may be produced by the following method, which is disclosed, for example, in the patent specification cited in the prior art section:

Firstly, a layer containing the light-shielding material is fixed to one main surface of the polymer film used as the light-transmitting part to form the louver-form element, that is, a laminate film consisting of the polymer film and the light-shielding material layer. A plurality of such laminate films are prepared and laminated to form a precursor louver film in which the polymer film and the light-shielding material layers are alternately arranged and fixed each other. Such a precursor louver film is skived at a desired thickness along the direction (lamination direction) perpendicular to the main surface (laminated plane) of the precursor film to obtain the louver layer.

As the louver film having the louver layer, a commercially available louver film may also be used. A commercially available louver layer for a louver film may be used as the louver layer used as a component member of the optical filter according to the present invention. One specific example of the commercially available louver film is "LIGHT CONTROL FILM^{®}" of 3M.

One preferred embodiment of the display unit according to the present invention is explained by making reference to Fig. 2. The display unit shown in Fig. 2 comprises the display module (21) having the light-exiting surface, the touch panel module (22) having the back surface facing the light-exiting surface of the display module and the front surface which the user can touch, and the optical filter (23) comprising the louver film provided between the light-exiting surface of the display module and the back surface of the touch panel module.

The optical filter is adhered to almost all the area of the region observed by the user on at least one of the back surface of the touch panel module and the light-exiting surface of the display module.

The type of the display module is not limited, and any display module used in a usual device such as PC, a portable terminal, an unmanned customer service machine, etc. Any display module which can provide information to the user (the operator) may be used. Examples of the display module are flat display panels such as liquid crystal panels, electroluminescence (EL) panels, plasma display panels (PDP), etc.

The liquid crystal panel comprises a pair of first and second polarizing plates and a liquid crystal layer interposed between them. The polarizing plates are placed so that the polarization axis of the first polarizing plate (the first polarization axis) and that of the second polarizing plate (the second polarization axis) form a certain angle, for example, they are orthogonalized. The liquid crystal panel usually has a light source for illuminating the back surface of the panel (the surface opposite to the light-exiting surface), that is, a backlight. An example of the backlight is an edge-light type backlight which comprises a light-guide plate and a light source which supplies light in the light-guide plate from the edge face of the plate. Also, a beneath type back light is used.

The touch panel module is a light-transmitting panel which functions as a switch. The touch panel module may be a module which is installed as a panel-form press switch element in a usual touch panel type display device (e.g. PC, a portable terminal, an unmanned customer service machine, a car navigation system, etc.). The transparent plate (or film) of the touch panel module is a plate (or film) comprising a polymer such as PET, polycarbonate, etc. A glass plate may be used as the back surface-side transparent plate to which the fixed electrode is provided.

The movable and fixed electrodes are preferably both transparent electrodes. The transparent electrode may be a conventional transparent electrode such as a ITO (indium-tin oxide) electrode.

The optical filter usually comprises the louver film, and the adhesive layer fixedly provided on at least one of the front surface and the back surface of the louver film. The optical filter can be adhered to the module with this adhesive layer.

Besides the above applications, the optical filter of the present invention may be suitably used in various applications. For example, when the display device has a photosensor, the optical filter is installed in the receptor of the sensor to control the direction of light to be entered in the photosensor.

For example, in the case of a display device having an infrared-sensor, the optical filter is provided to cover the surface (light-receiving surface) of the receptor of the sensor. The infrared-sensor usually receives photosignals from a transmitter device such as a remote control device or an optical communication device. In general, the photosignals are light beams in the infrared or far-infrared region (having a wavelength of about 800 to 1,200 nm), but light beams generated by a body other than the transmitter device (for example, the sun, lighting devices, etc.) sometimes include the light beams in such a wavelength range. Furthermore, the signal, which is reflected by the surface of an in-car wall, etc. and then enters the receptor surface from the side direction may interfere with the signal which directly reaches the receptor to decrease the intensity of the signal received by the sensor. In such cases, when the light-receiving surface of the sensor is covered with the optical filter of the present invention, the direction of the light beam entering the receptor can be controlled and the entrance of the unnecessary light beams to the receptor from the side direction can be prevented. That is, the receptor receives only the photosignals from the transmitter device which is present in the front direction of the receptor of the sensor. Thus, the malfunction of the display device, which may be caused by the reception of the disturbing light from the side reaction, can be effectively prevented.

When the optical filter is used in the application described above, the optical filter may be installed only in the receptor, or it may be arranged so that it covers both the receptor surface and the display screen. When the optical filter is used in such an application, the louver-form elements preferably comprise dark pigments or dark dyes such as black or gray pigments or dyes, dark metal oxides, etc. so that they effectively absorb the light beams in the infrared or far-infrared region.

The optical filter may cover the light-emitting surface (signal-transmitting surface) of the transmitter device such as the remote-control device. In such a case, the light beam can be transmitted to the sensor of only one display device when two or more display devices having different functions are arranged side by side.

### Example 1

In this Example, an optical filter was produced by laminating a back surface-side substrate, a louver layer, a front surface-side substrate and a repeelable adhesive layer in this order, as shown in Fig. 1.

The louver layer was a louver layer having a thickness of about 200 µm and a view angle of 60 degrees (a louver layer "OAG 60" (with no protective layer) for a louver film manufactured by 3M). As the backside substrate, a PET film having a thickness of 38 µm (EMBLET^{®} UHD-38 manufactured by UNITIKA) was used. The back surface-side substrate had a light-transmittance of 92%.

As the front surface-side substrate carrying the repeelable adhesive layer, a commercially sold repeelable adhesive film was used. This repeelable adhesive film was an OLEFIN GEL POLYMER SHEET (trade name) of PANAC Co., Ltd. The front surface-side substrate was a PET film having a thickness of 50 µm, and the repeelable adhesive layer was adhered to almost all the front surface of the PET film (the surface which was not in contact with the louver film). The repeelable adhesive layer was a layer of a copolymer of an α-olefin and styrene having a thickness of 38 µm. The light-transmittance of the front surface-side substrate (including the adhesive layer) was 93%, when measured with a haze meter.

This repeelable adhesive film was adhered to a PET film having a thickness of 100 µm (BUM-100 (trade name) manufactured by UNITIKA) with the repeelable adhesive layer to obtain a test sample, which was used in the measurement of a peel strength against PET.

The measurement of peel strength was carried out using a peel strength tester (I-mass Tester, MODEL sp-102C available from I-mass (USA)) at a peeling angle of 180 degrees at a peeling rate of 90 inch/min. (about 229 cm/min.).

The specific procedures of the measurement of the peel strength against PET were as follows:

Firstly, the repeelable adhesive film was cut to a size of 15 cm x 25 cm to obtain a sample. Then, the adhesion surface of the sample was cleaned with isopropanol and press adhered to the PET film with a roll (2 kg) defined by JIS Z 0237 at 20°C, 65%RH. After keeping the adhesive film adhered to the PET film under the same conditions for 3 hours, the peel strength was measured using the above tester under the above conditions.

The peel strength against PET of the repeelable adhesive layer was 1.0 N/25 mm.

The substrates and the louver layer were adhered and fixed each other through the adhesive layers containing a self-adherent acrylic polymer to finish the optical filter of this Example. The total thickness of the optical filter was 360 µm.

The optical filter of this Example was attached to the screen of a touch panel type liquid crystal display (FLORA 220FX NP3 manufactured by HITACHI LTD.) through the above repeelable adhesive layer, and subjected to a practical test.

As the result of the test, the effect to prevent peeping was sufficient. That is, when the screen was viewed from a side direction apart from the front direction by an angle of about 40 degrees, the information displayed on the screen was not readable.

Furthermore, the surface of the touch panel and the optical filter could be adhered with leaving no gap between them, and no malfunction occurred when the analog characters were inputted and the buttons on the touch panel were pushed. The once attached optical filter was easily detached and reattached. After the reattachment, the surface of the touch panel and the optical filter were closely adhered, and no malfunction occurred during the operation of the touch panel.

Separately, the optical filter of this Example was installed in a touch panel type liquid crystal display (Palm^{®} IIIc manufactured by Palm). That is, the optical filter of this Example was placed between the touch panel module and the liquid crystal display module of the above display, and the optical filter was adhered to the back surface of the glass substrate (the back surface-side transparent plate carrying the fixed electrode) of the touch panel module with the repeelable adhesive layer. Thereby, the touch panel type liquid crystal display having the touch panel unit according to the present invention was obtained. The light transmittance of this touch panel unit was 65% when measured with illuminating the unit from the optical filter side.

The luminance in the front direction (about zero degree) of the display screen was 62 cd/m² at maximum, when it was measured with a luminance distribution measuring device (EZ CONTRAST^{®} manufactured by ELDIM). The maximum luminance of the display with no optical filter was 94 cd/m².

This display was subjected to a practical test.

As the result of the test, the effect to prevent peeping was sufficient. That is, when the screen was viewed from a side direction apart from the front direction by an angle of about 40 degrees, the information displayed on the screen was not readable.

Furthermore, the touch panel module and the optical filter could easily be adhered with leaving no gap between them, and the once attached optical filter was easily detached and reattached. The display screen had high luminance, and the screen viewed from the front direction (about zero degree) had sufficient brightness. In addition, no malfunction occurred when the analog characters were inputted and the buttons on the touch panel were pushed.

The optical filter of this Example was heated at 95°C for 30 minutes, and the composition of the gas generated was analyzed with a gas chromatography analyzer (DHS-GS/MS).

For comparison, an optical filter was produced in the same manner as in Example 1 but the repeelable adhesive layer was replaced with one comprising a silicone rubber, and the composition of the gas generated on heating was analyzed.

Since the repeelable adhesive layer of the latter comparative optical filter contained the silicone rubber, about 200 ppm of low molecular weight cyclic siloxanes formed, which might be generated through the thermal decomposition of the silicone rubber.

This amount of the cyclic siloxanes was an amount converted to pentadecane. In contrast, in the case of the optical filter of Example 1, the repeelable adhesive layer had high thermal stability and thus no cyclic oligomers such as cyclic siloxanes formed on heating.

### Comparative Example 1

An optical filter was produced in the same manner as in Example 1 except that the repeelable adhesive layer was replaced by a self-adherent film, which was prepared as follows:

The self-adherent film used in this Comparative Example was prepared by applying a coating liquid containing a self-adherent polymer and a crosslinking agent on the back surface of a PET film (UC-38 (trade name) of UNITIKA having a thickness of 38 µm) as a back surface-side substrate, to form a self-adherent layer. The thickness of the self-adherent layer was 15 µm.

The self-adherent polymer was synthesized by a solution polymerization method using a raw material containing 92.5 parts by weight of butyl acrylate and 7.5 parts by weight of acrylic acid. This self-adherent polymer was dissolved in acetone to prepare an acetone solution containing 30% by weight in terms of the non-volatile concentration, and then a bisamide crosslinking agent as a crosslinking agent was added to this solution to prepare the above coating liquid. The weight ratio of the self-adherent polymer to the crosslinking agent (non-volatile weight) was 99.6:0.4. The self-adherent layer had a peel strength against PET of 7 N/25 mm measured under the same conditions as those in Example 1.

Since the optical filter of this Comparative Example had low repeelability, it was difficult to detach the optical filter, and the touch panel tended to be broken if the touch panel was not carefully detached.

### Comparative Example 2

A liquid crystal display was assembled in the same manner as in Example 1 except that a louver film having no adhesive layer (LIGHT CONTROL FILM^{®} 100P of 3M) was used in place of the optical filter, and this film was placed between the touch panel module and the liquid crystal display module without adhering the film to either module.

The laminate of the touch panel module and the liquid crystal display module had a light-transmittance of 59%, and the screen had a luminance of 52 cd/m² when viewed from the front direction of the screen. These values were lower than those of Example 1 using the touch panel unit produced by adhering the touch panel module and the optical filter with the adhesive.

As explained above, the optical filter of the present invention has good repeeling properties. When it is installed in a device, it does not generate any thermally decomposed products, or the thermally decomposed products do not remain in the device, if they are generated.

In the display unit of the present invention, the optical filter can be easily assembled in the display unit (or the touch panel) and the display unit can be disassembled to the genuine parts which allow the recycling of the parts.

Furthermore, the deterioration of luminance of the image on the display unit surface can be effectively prevented.

## Claims

1. An optical filter comprising an optical film and containing an adhesive for adhering said optical film to an adherent surface on the surface of said optical film or inside said optical film, wherein said adhesive comprises a olefin polymer and has a repeeling property from the adherent surface.

2. The optical filter according to claim 1, wherein an adhesive layer formed from said adhesive has a peeling strength of 0.2 to 5 N/25 mm when measured against a surface of a polyethylene terephthalate (PET) at a peeling rate of 90 inch/min. (about 229 cm/min.) at a peeling angle of 180 degrees.

3. The optical filter according to claim 1, wherein said optical film comprises a louver film.

4. A display unit comprising:
(A) a display module having a light-exiting surface,
(B) a light-transmitting touch panel module which is provided to cover the light-exiting surface of said display module and has a back surface facing the light-exiting surface of said display module and a front surface which a user can touch,
(C) an optical filter according to claim 1, 2 or 3 provided between the light-exiting surface of said display module and the back surface of said touch panel module,
wherein said optical filter is adhered to at least one of the back surface of said touch panel module and the light-exiting surface of said display module with said adhesive.

5. A touch panel unit comprising:
(i) a light-transmitting touch panel module having a back surface which faces the light-exiting surface when said touch panel module is provided to cover the light-exiting surface of said display module, and a front surface which a user can touch, and
(ii) an optical filter according to claim 1, 2 or 3, which is fixed to the back surface of said touch panel module,
wherein said optical filter is adhered to the back surface of said touch panel module with said adhesive.

## Patentansprüche

1. Optischer Filter, umfassend einen optischen Film und enthaltend einen Kleber zum Kleben des optischen Films an eine haftende Oberfläche auf der Oberfläche des optischen Films oder in dem optischen Film, wobei der Kleber ein Olefinpolymer umfasst und eine Wiederablösungseigenschaft von der haftenden Oberfläche aufweist.

2. Optischer Filter nach Anspruch 1, wobei eine aus dem Kleber ausgebildete Klebeschicht eine Ablösefestigkeit von 0,2 bis 5 N/25 mm aufweist bei Messung gegenüber einer Oberfläche eines Polyethylenterephthalats (PET) bei einer Ablöserate von 90 Inch/min (etwa 229 cm/min) bei einem Ablösewinkel von 180 Grad.

3. Optischer Filter nach Anspruch 1, wobei der optische Film einen Lamellenfilm umfasst.

4. Displayeinheit, umfassend:
(A) ein Displaymodul mit einer Lichtaustrittsoberfläche,
(B) ein lichtdurchlässiges Berührungspaneelmodul, das bereitgestellt ist, um die Lichtaustrittsoberfläche des Displaymoduls zu bedecken und eine der Lichtaustrittsoberfläche des Displaymoduls zugewandte hintere Oberfläche und eine vordere Oberfläche, die ein Benutzer berühren kann, aufweist,
(C) einen optischen Filter nach Anspruch 1, 2 oder 3, bereitgestellt zwischen der Lichtaustrittsoberfläche des Displaymoduls und der hinteren Oberfläche des Berührungspaneelmoduls,
wobei der optische Filter mit dem Kleber an mindestens eine der hinteren Oberfläche des Berührungspaneelmoduls und der Lichtaustrittsoberfläche des Displaymoduls geklebt wird.

5. Berührungspaneeleinheit, umfassend:
(i) ein lichtdurchlässiges Berührungspaneelmodul mit einer hinteren Oberfläche, die der Lichtaustrittsoberfläche zugewandt ist, wenn das Berührungspaneelmodul bereitgestellt ist, um die Lichtaustrittsoberfläche des Displaymoduls zu bedecken, und einer vorderen Oberfläche, die ein Benutzer berühren kann, und
(ii) einen optischen Filter nach Anspruch 1, 2 oder 3, der an der hinteren Oberfläche des Berührungspaneelmoduls fixiert ist,
wobei der optische Filter mit dem Kleber an die hintere Oberfläche des Berührungspaneelmoduls geklebt ist.

## Revendications

1. Filtre optique comprenant un film optique et contenant un adhésif pour coller ledit film optique à une surface adhérente sur la surface dudit film optique ou à l'intérieur dudit film optique, ledit adhésif comprenant un polymère oléfinique et présentant une propriété de redécollement de la surface adhérente.

2. Filtre optique selon la revendication 1, dans lequel une couche adhésive formée à partir dudit adhésif a une résistance au décollement de 0,2 à 5 N/25 mm, lorsque mesurée contre une surface d'un téréphtalate de polyéthylène (PET) à une vitesse de décollement de 90 pouces/minute (environ 229 cm/min) et à un angle de décollement de 180 degrés.

3. Filtre optique selon la revendication 1, dans lequel ledit film optique comprend un film à claire-voie.

4. Unité d'affichage comprenant :
(A) un module d'affichage ayant une surface de sortie de la lumière ;
(B) un module de panneau tactile transmettant la lumière qui est disposé pour recouvrir la surface de sortie de la lumière dudit module d'affichage et qui a une surface arrière faisant face à la surface de sortie de la lumière dudit module d'affichage et une surface avant qu'un utilisateur peut toucher,
(C) un filtre optique selon la revendication 1, 2 ou 3 disposé entre la surface de sortie de la lumière dudit module d'affichage et la surface arrière dudit module de panneau tactile,
dans laquelle ledit filtre optique est collé à la surface arrière dudit module de panneau tactile et/ou à la surface de sortie de la lumière dudit module d'affichage avec ledit adhésif.

5. Unité de panneau tactile comprenant :
(i) un module de panneau tactile transmettant la lumière ayant une surface arrière qui fait face à la surface de sortie de la lumière quand ledit module de panneau tactile est disposé pour recouvrir la surface de sortie de la lumière dudit module d'affichage, et une surface avant qu'un utilisateur peut toucher, et
(ii) un filtre optique selon la revendication 1, 2 ou 3 qui est fixé à la surface arrière dudit module de panneau tactile,
dans laquelle ledit filtre optique est collé à la surface arrière dudit module de panneau tactile avec ledit adhésif.
